# FASCICULE DE BREVET EUROPEEN

(11) **EP 0 508 903 B1**
(45) Date de publication et mention de la délivrance du brevet: **05.07.1995**
(21) Numéro de dépôt: 92401007.7
(22) Date de dépôt: 09.04.1992
(51) Int. Cl.: B65G 1/127, B65G 1/137

(54) **Procédé d'accès en libre service à un magasin de stockage du type à compartiments mobiles et dispositif pour la mise en oeuvre du procédé**
Verfahren und Vorrichtung zum Zugang zwecks Selbstbedienung in ein Lagerhaus mit beweglichen Fächern
Method and device for access to self service in a warehouse with movable compartments

(30) Priorité: 12.04.1991 FR 9104753
(43) Date de publication de la demande: 14.10.1992
(73) Titulaire: A 5 SYSTEMES Société à Responsibilité Limitée, 85290 Mortagne sur Sevre (FR)
(72) Inventeur: Harry, Henri, F-95500 Gonesse (FR); Walle, Alain, F-78310 Maurepas (FR); Bodelle, Jean, F-77000 Melun (FR); Gourdon, Laurent, F-49300 Cholet (FR); Cheneau, Gilles, F-49360 Maulevrier (FR); Frouin, Gilbert, F-49300 Cholet (FR)
(74) Mandataire: Le Brusque, Maurice

(56) Documents cités:
- WO-A-89/09172
- US-A- 4 813 752

## Description

La présente invention concerne un procédé qui permet, à des clients ou autres destinataires, d'accéder en libre service à un magasin de stockage du type à compartiments mobiles, renfermant des produits divers. Elle concerne également le dispositif pour la mise en oeuvre du procédé ainsi que le magasin équipé notamment de ce dispositif.

Dans un atelier par exemple, il existe des magasins de stockage dans lesquels sont rassemblés des outils ou autres, destinés à des machines outils, à des chaînes de production ou d'assemblage. Ces outils ou pièces sont à la disposition des utilisateurs mais, la plupart du temps, grâce à un magasinier qui a pour fonction de mettre à disposition ces outils ou ces pièces.

Cette organisation traditionnelle des magasins impose une présence permanente d'un magasinier pour délivrer aux utilisateurs clients, les matériels et pièces qu'ils réclament. Les besoins des utilisateurs, notamment dans le domaine de l'outillage, surviennent de façon tout à fait aléatoire ; la réponse efficace à ces besoins représente un coût non négligeable.

Par ailleurs, lorsque ces magasins sont utilisés dans des chaînes d'assemblage par exemple, et qu'ils renferment principalement des pièces dont le stock est surveillé, la présence d'un magasinier qui contrôle la sortie de ces pièces ainsi que le stock, est nécessaire en permanence, pendant toute la durée de fonctionnement de la chaîne.

La présente invention propose, pour ce type de magasin, un procédé qui autorise le libre accès pour les utilisateurs clients ce qui permet à ces derniers de se servir seuls, indépendamment de la présence d'un magasinier. Ce procédé présente l'avantage d'effectuer, par des moyens de gestion appropriés, un contrôle des mouvements de sortie ou d'entrée des produits contenus dans le magasin (outils ou pièces par exemple) et, selon le cas, d'en assurer le renouvellement, l'entretien etc...

Le procédé selon l'invention consiste :
- à identifier l'utilisateur client et ses besoins ;
- à positionner, en fonction des besoins du client, le compartiment ou alvéole approprié du magasin, au niveau du guichet servant de poste libre service, avec le produit attendu par le client ;
- à calibrer et à positionner l'ouverture du guichet en fonction de la taille et de la position de l'alvéole du compartiment qui se présente et, simultanément,
- à ouvrir la ou les portes du guichet pour que le client puisse effectuer son opération,et à refermer lorsque ladite opération est terminée.

Le dispositif selon l'invention pour la mise en oeuvre du procédé sus-décrit, dans le cadre d'un magasin de stockage du type à compartiments mobiles, en forme de stockeurs rotatifs, de trans-stockeurs ou autres, comporte :
- des moyens d'identification de l'utilisateur client et de ses besoins ;
- des moyens de manoeuvre des compartiments pour amener l'alvéole sélectionnée devant le guichet qui correspond au poste libre service ;
- des moyens de calibrage et de positionnement de l'ouverture de la paroi obturant le guichet, en fonction de la taille et de la position de l'alvéole qui correspond aux besoins du client ;
- des moyens de manoeuvre de cette ouverture.

Selon l'invention, les moyens d'identification du client utilisateur et de ses besoins, sont constitués, seuls ou en combinaison, d'un clavier sur lequel le client peut s'identifier et transmettre sa commande, d'un lecteur de code barre, d'un lecteur de carte magnétique ou autre.

Toujours selon l'invention, l'ouverture du guichet est obturée par une paroi divisée en plusieurs portes dont la largeur de chacune correspond à la plus petite largeur d'une alvéole d'un compartiment, lesquelles portes sont par ailleurs mobiles perpendiculairement à la base de ladite ouverture.

Toujours selon l'invention, chaque porte coopère avec un système de butées escamotables qui, selon le cas, verrouille ou définit une position d'ouverture en fonction de la taille de l'alvéole et en particulier de sa hauteur.

Selon une disposition préférentielle de l'invention, les moyens de manoeuvre des portes sont constitués de vérins ; un vérin étant associé à chaque porte et leur course correspond au moins à la hauteur de l'ouverture du guichet.

Selon une autre disposition de l'invention, les butées coopérant avec chacune des portes, sont regroupées, par niveau et par fonction, sur des axes qui sont parallèles à la base de l'ouverture du guichet, situés au-dessus de cette dernière, chaque axe étant actionné au moyen d'un vérin pour faire passer les butées de leur position active à la position inactive et inversement.

Selon une autre disposition préférentielle de l'invention, l'axe porteur des butées de verrouillage des portes, comporte un organe de rappel élastique pour les maintenir verrouillées en cas d'incident sur les moyens de commande desdites portes.

Selon une autre disposition de l'invention, le dispositif comporte au moins une cellule photoélectrique interposée entre les compartiments et le guichet, pour contrôler notamment la fermeture des portes.

L'invention concerne également un magasin équipé d'un dispositif tel que décrit ci-dessus, lequel magasin comporte au moins un guichet libre service et éventuellement, un poste de chargement, situé à l'arrière du magasin, à l'opposé dudit poste de chargement, lequel poste de chargement est équipé d'une trappe verrouillable donnant accès, par l'arrière, à l'ensemble des alvéoles des différents compartiments constituant ledit magasin.

L'invention sera détaillée à l'aide de la description suivante et des dessins annexés, donnés à titre indicatif, et dans lesquels :
- la figure 1 est une vue générale schématique en perspective, d'un magasin selon l'invention ;
- les figures 2 et 3 représentent respectivement un utilisateur client qui se présente au guichet libre service et un magasinier qui se présente au poste de remplissage du magasin ;
- la figure 4 représente, de façon schématique, les principaux ensembles de gestion du magasin ;
- la figure 5 représente le guichet en vue de face, de façon partielle, montrant une partie des portes et leurs moyens de commande ;
- la figure 6 représente, de façon partielle et vu de dessus, en coupe, le guichet du poste libre service ;
- la figure 7 représente en coupe selon 7-7, le guichet et les moyens de commande et de verrouillage des portes ;
- la figure 8 représente les vérins de manoeuvre des butées de calibrage de l'ouverture ;
- la figure 9 représente les moyens de manoeuvre des butées de verrouillage des portes en position fermée et
- la figure 10 les moyens de rappel élastique des butées de verrouillage.

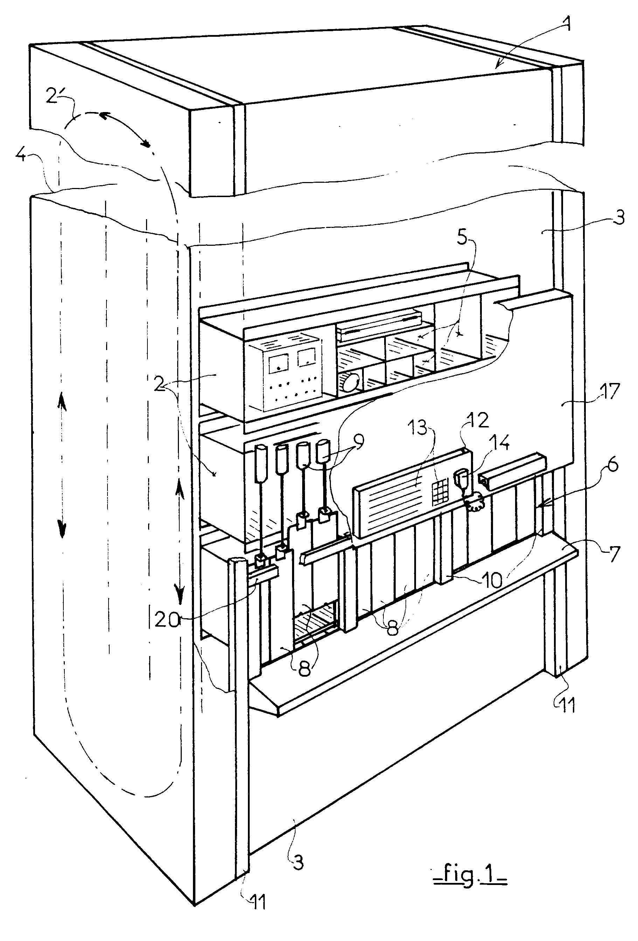

On a représenté, figure 1, de façon schématique, un magasin distributeur selon l'invention, dans lequel sont stockés des produits divers destinés à des clients utilisateurs.

Ce magasin automatique est du type stockeur rotatif. Il se présente sous la forme d'un coffre 1 en forme de parallélépipède rectangle pouvant avoir une hauteur importante. Ce coffre renferme une multitude de compartiments 2 guidés par des moyens appropriés ne faisant pas partie de l'invention, pour se déplacer verticalement sur la face avant 3 du coffre et la face arrière 4, selon un parcours 2' représenté en traits mixtes fins avec des flèches.

On remarque que les compartiments 2 sont divisés en plusieurs alvéoles 5 ou cases de dimensions différentes, adaptées aux dimensions des produits stockés. Ces alvéoles 5 renferment des produits divers selon la destination du magasin. Dans un atelier, il peut s'agir d'outils destinés aux utilisateurs de machines ou de pièces destinées à des monteurs sur des chaînes d'assemblage par exemple.

La face avant 3 du magasin comporte une ouverture 6 en forme de guichet. La base de cette ouverture 6 est, dans l'exemple de la figure 1, une tablette 7, en saillie, de dimensions appropriées pour pouvoir y poser les produits sortis du magasin.

Cette ouverture ou guichet 6 constitue le poste libre service. Il est équipé d'une paroi escamotable constituée d'un ensemble de portes 8 mobiles verticalement au moyen de vérins 9 partiellement représentés. Ces portes 8 ont une largeur qui correspond sensiblement à la largeur minimale d'une alvéole 5 d'un compartiment 2. On remarque, figure 1, trois groupes de portes 8 séparées par des montants 10. Ces montants comportent des glissières de guidage des portes 8. Ils sont disposés entre les montants latéraux 11 du coffre 1, latéralement et au centre.

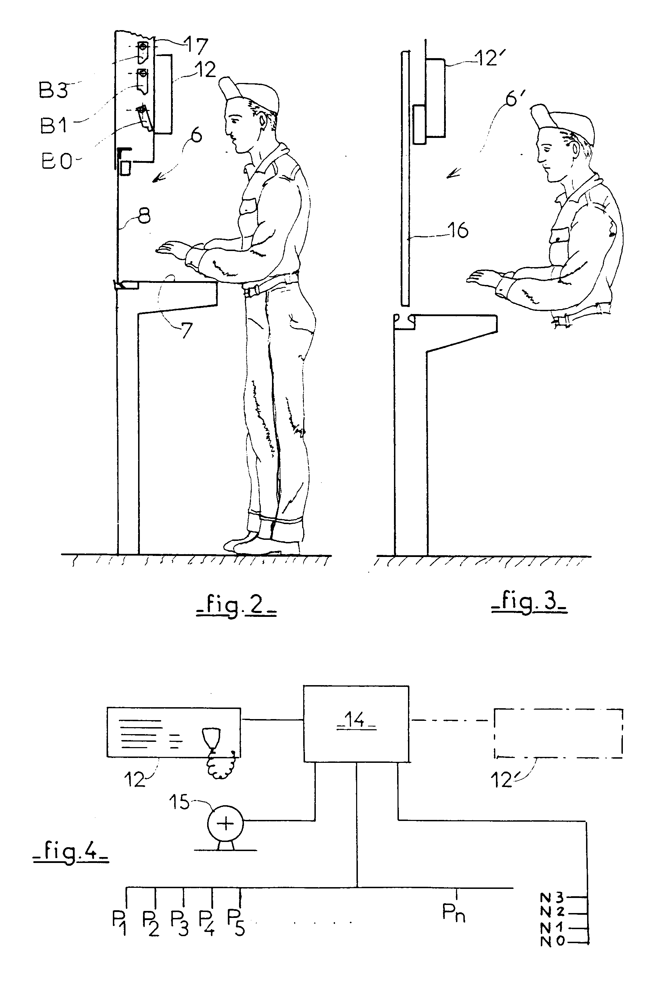

L'utilisateur client du magasin, tel que représenté figure 2 au poste de libre service, pourra accéder aux produits disposés dans les compartiments 2 et en particulier dans une des alvéoles 5, après avoir été identifié et après avoir communiqué ses besoins grâce à des moyens disposés sur la façade 3, au-dessus du guichet 6. Ces moyens sont regroupés sur une console 12 et ils peuvent consister en un clavier 13 sur lequel l'opérateur pourra taper son mot de passe, ou en un lecteur 14 de code barre ou encore, non représenté, en un dipositif lecteur de carte magnétique ou autre.

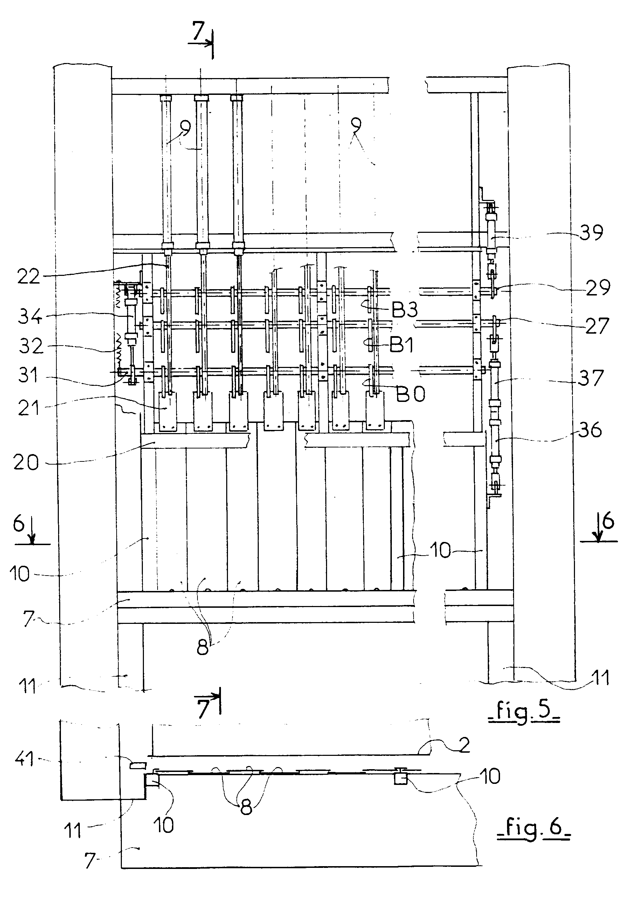

Les données d'identification de l'utilisateur client et de ses besoins, sont transmises à un ordinateur 14, figure 4, chargé de la gestion de l'ensemble du magasin. Lorsque les données de l'utilisateur ont été saisies, l'ordinateur 14 déclenche le moteur 15 qui sert à déplacer les compartiments 2 à l'intérieur du coffre 1, pour les amener au niveau du guichet 6. L'alvéole 5 dans laquelle se situe le produit sélectionné, destiné à l'utilisateur client, va se positionner au niveau de la tablette 7, c'est-à-dire que le fond de l'alvéole 5 sélectionnée se situe au même niveau que la tablette 7. Dès que l'alvéole 5 est positionnée, l'ordinateur de gestion procède à l'ouverture calibrée des portes 8 appropriées correspondant à la dimension de l'alvéole 5 ; selon la largeur et la position de l'alvéole 5, un choix parmi les portes P1 à Pn sera effectué, le nombre de portes sera sélectionné en fonction de la largeur de l'alvéole et la hauteur d'ouverture de ces portes correspondra à sa hauteur. La levée des portes 8 sélectionnées est également réglée par l'ordinateur 14 à des niveaux 1, 2 ou 3, comme représenté figure 4, lesquels niveaux sont fonction des hauteurs possibles des alvéoles 5 des compartiments 2. Le niveau N0 correspond au niveau de fermeture des portes 8 ; les hauteurs d'alvéoles correspondent aux niveaux N1, N2, N3.

Les moyens de sélection des différents niveaux de levée des portes 8 sont détaillés infra.

La figure 3 illustre un poste qui peut être positionné sur la face arrière 4 du magasin, destiné à un magasinier pour le remplissage des compartiments 2. Ce magasinier dispose lui aussi d'un guichet 6' muni d'une ouverture 16 en forme de trappe dont la dimension correspond au moins à la dimension totale d'un compartiment 2. Ce magasinier peut lui aussi disposer d'un boîtier 12' qui comprend un clavier ou autre, pour introduire toutes les données nécessaires dans l'ordinateur 14.

Selon le cas, on peut aussi prévoir un chargement du magasin à partir du guichet 6 situé sur la face frontale 3. Ce chargement s'effectue de la même façon que pour le libre service ou, pour plus de commodité, il peut aussi s'effectuer avec toutes les portes ouvertes.

On peut également prévoir plusieurs guichets 6 sur la face avant 3 et en particulier un guichet à chaque étage de l'atelier par exemple.

On a représenté plus en détail, figures 5 à 10, les portes 8 et leurs moyens de commande, lesquels moyens de commande sont disposés au niveau de la face frontale 3 du coffre 1, enfermés dans un carter 17 qui apparaît figures 1, 2 et 7. Ce carter est monté sur une charnière 18 à sa partie supérieure, ce qui permet son escamotage vers le haut pour accéder au mécanisme de manoeuvre des portes. Un verrou 19 permet de le maintenir fermé.

La figure 5 est une vue de face du magasin, sans le couvercle 17 qui recouvre l'ensemble des mécanismes de manoeuvre et de verrouillage des portes 8. Ces portes 8 se présentent sous la forme de simples plaques de tôle rectangulaires qui se chevauchent sur leur grand côté comme représenté figure 6 en vue de dessus en coupe. La porte n° 1 située à gauche est guidée dans un rail à section en U, aménagé dans le montant 10. Le nombre de portes varie selon les dimensions du guichet. On remarque figure 6, d'une part, la tablette 7 disposée devant les portes et, d'autre part, derrière ces portes, le compartiment 2.

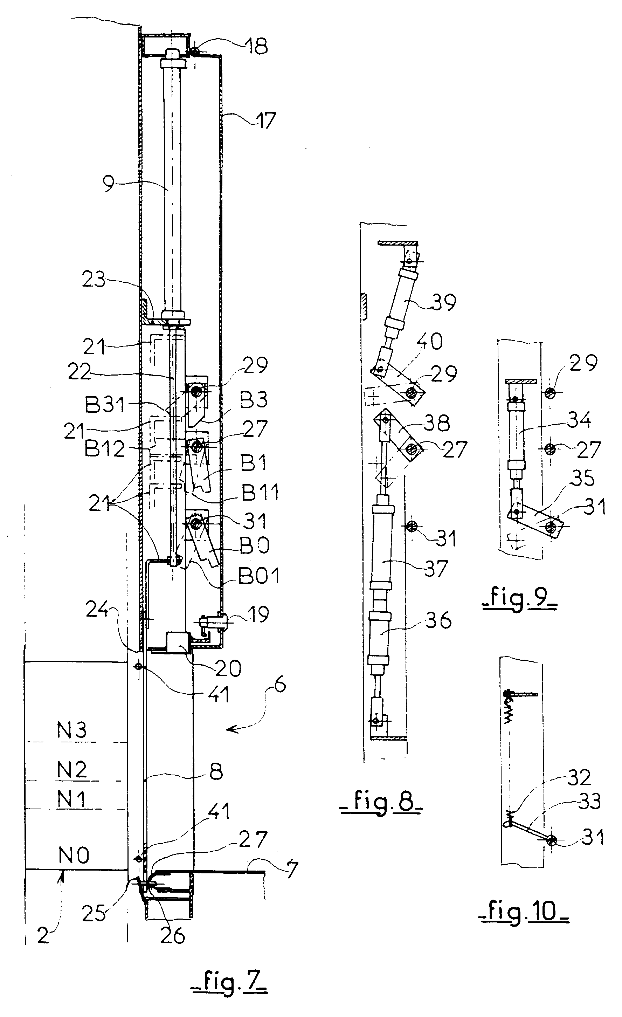

L'ouverture du guichet 6 est un cadre défini par la tablette 7, la traverse supérieure 20 et les montants latéraux 10. Chaque porte 8 comporte, située au-dessus de la traverse horizontale 20, une patte 21 en forme d'équerres qui la relie à l'extrémité de la tige 22 de son vérin 9 de manoeuvre. Ces équerres 21 apparaissent clairement sur la figure 7. L'aile horizontale de ces équerres 21 coopère avec un système de butées détaillé plus loin, pour verrouiller les différentes positions qui peuvent être prévues par les portes 8. Chaque vérin 9 est solidaire, à son extrémité supérieure, d'une traverse horizontale 23 située au-dessus de la traverse 20, et fixée sur la paroi frontale 3 ou les montants latéraux 11 du coffre 1.

Chaque porte 8 est guidée à sa partie supérieure, entre la traverse 20 et la paroi frontale 3. Ces portes 8 sont, en position fermées, maintenues à leur extrémité inférieure, par une barrette 25 qui est inclinée pour faciliter leur mise en place, lors de la fermeture, entre la tablette 7 et ladite barrette 25. Cette barrette 25 comporte par ailleurs, des ergots 26 coopérant avec des encoches appropriées aménagées à l'extrémité inférieure des portes 8, pour centrer ces dernières et les maintenir dans une position verticale, lorsqu'elles sont fermées. On remarque encore, entre la porte 8 et la tablette 7, un bourrelet élastique 27 de protection, pour éviter notamment l'effet guillotine.

On a représenté, figure 7, un compartiment 2 positionné devant l'ouverture du guichet 6. Le niveau inférieur de ce compartiment 2 se situe au même niveau que la tablette 7 qui constitue la base de l'ouverture du guichet 6.

On a indiqué, dans ce compartiment 2, trois niveaux intermédiaires N1, N2, N3 qui correspondent à des hauteurs d'alvéoles aménagés dans ledit compartiment. L'ouverture des portes 8, comme mentionné précédemment, correspond à la hauteur de l'alvéole positionnée au niveau de la tablette 7. Ainsi, pour lever une ou plusieurs portes 8 jusqu'au niveau N1, on actionne le ou les vérins 9 correspondants qui lèvent la ou les portes 8 choisies ; ces portes sont arrêtées dès qu'elles ont atteint le niveau N1. Les portes sont arrêtées au moyen de butées B1 disposées sur un même axe horizontal 27. On remarque, en traits mixtes fins, la position de ces butées B1, en action sur la partie horizontale des équerres 21 représentées également en traits mixtes fins. Les butées B1 peuvent adopter deux positions actives B11 et B12 qui correspondent au niveau N1 et au niveau N2. Pour ce niveau N2, on remarque, figure 7, en traits mixtes fins, que la butée B12 est positionnée sensiblement à l'horizontale.

Le niveau N3 est obtenu au moyen d'un jeu de butées B3 qui est disposé sur un axe horizontal 29 au-dessus de l'axe 27. On a représenté en traits mixtes fins, les butées B3 qui correspondent au niveau N3 ; ces butées B3 arrêtent la ou les équerres 21 de la ou des portes sélectionnées lorsqu'elles atteignent le niveau N3.

Lorsqu'une ou plusieurs portes 8 doivent être ouvertes totalement pour dégager toute la hauteur du compartiment, les butées B1 et B3 sont inactives de façon à laisser remonter totalement les équerres 21 qui tractent lesdites portes 8, jusqu'aux vérins 9.

Lorsque les portes 8 sont en position fermée, des butées B0 réunies sur un même axe horizontal 31 disposé sous l'axe 27, sont positionnées en position active B01 pour interdire tout mouvement des équerres 21. On a représenté, figure 10, un moyen servant de sécurité, visant à maintenir les butées B0 dans leur position active d'immobilisation des portes 8. Ce moyen est constitué d'un ressort 32 qui agit en permanence sur un levier 33 solidaire de l'axe 31, faisant pivoter cet axe 31 en vue de maintenir les butées B0 en position active de verrouillage, lors d'incidents ou de défaillance sur le système d'alimentation électrique ou autre.

On a représenté, figure 9, le vérin 34 servant à manoeuvrer l'axe 31 sur lequel sont positionnées les butées B0, pour les faire passer de la position inactive à la position active de verrouillage des portes 8 et inversement. Le vérin 34 est solidaire de la face avant 3 et il agit sur un levier 35 qui est solidaire de l'axe 31. Tel que représenté figure 9, en traits forts, le vérin et le levier 35 sont dans une position qui correspond à la position active des butées B0 c'est-à-dire à une position qui réalise le verrouillage de l'ensemble des portes 8. On a représenté le levier 35 en traits mixtes fins dans la position qui correspond à la position inactive des butées B0.

On remarque, figure 8, les moyens qui permettent le mouvement des axes 27 et 29 c'est-à-dire les axes qui portent respectivement les butées B1 et B3 et qui manoeuvrent ces butées pour les faire passer, comme précédemment de leur position inactive à leur position active de verrouillage des portes 8. On remarque aussi, figure 8, l'axe 31 situé sous les axes 27 et 29. Ces différents axes sont positionnés sous le carter 17, ils sont horizontaux et parallèles à la tablette 7. L'axe 27 est actionné au moyen de deux vérins 36 et 37 par l'intermédiaire d'un levier 38. Ces vérins sont solidaires l'un de l'autre cul à cul, et de la face avant 3 à l'une de leur extrémité. Le premier vérin 36, de course relativement faible, sert à faire basculer les butées B1 de leur position inactive, à leur position B11 pour verrouiller les portes au niveau N1. Le vérin 37, de course sensiblement plus longue, sert à faire passer les butées B1 de leur position inactive à leur position correspondant à B12, c'est-à-dire à une ouverture des portes jusqu'au niveau N2. Tel que représenté figure 8, en traits forts, les butées B1 sont en position B12 ; les vérins 36 et 37 sont expansés tous les deux. Cette solution d'une double position des butées B1 permet de n'utiliser qu'un seul axe lorsque l'espace est trop réduit pour en loger deux.

On a représenté également, figure 8, le vérin 39 qui actionne par l'intermédiaire d'une biellette 40, l'axe 29 qui est l'axe porteur des butées B3. Ce vérin 39 fait passer les butées B3 de la position inactive à la position active B1, comme représenté en pointillés.

On a également fait figurer, figures 6 et 7, des cellules photoélectriques 41 interposées dans l'espace disponible entre les compartiments 2 et les portes 8. Ces cellules photoélectriques constituent des systèmes de sécurité par exemple, qui interdisent le mouvement des portes si un obstacle risque de gêner leur fermeture.

Les signes de référence insérés après les caractéristiques techniques mentionnées dans les revendications ont pour seul but de faciliter la compréhension de ces dernières et n'en limitent aucunement la portée.

## Revendications

1. Procédé d'accès en libre service à un magasin de stockage, du type à compartiments mobiles, renfermant des produits destinés à des clients ou autres utilisateurs, caractérisé en ce qu'il consiste :
- à identifier le client par son badge ou carte magnétique etc ... ;
- à positionner au niveau d'un guichet d'accès (6), en fonction du choix et des besoins du client identifié, le compartiment (2) ou l'alvéole (5) nécessaire à l'opération en cours ;
- à calibrer et positionner l'ouverture du guichet (6) en fonction de la taille et de la position de l'alvéole du compartiment, qui se présente audit guichet, et simultanément,
- à ouvrir la ou les portes (8) d'accès, pour que le client puisse effectuer son opération et à refermer l'ouverture lorsque l'opération est terminée.

2. Dispositif pour la mise en oeuvre du procédé d'accès en libre service à un magasin de stockage, du type à compartiments mobiles (2), renfermant des produits destinés à des clients ou autres utilisateurs, selon la revendication 1, caractérisé en ce qu'il comporte:
- des moyens d'identification du client (13,14) et de ses besoins ;
- des moyens de manoeuvre des compartiments, pour amener le compartiment (2) ou l'alvéole (5) sélectionné, devant le guichet (6) d'accès en libre service ;
- des moyens de calibrage et de positionnement de l'ouverture en fonction de la taille et de la position de l'alvéole contenant le produit ;
- des moyens de manoeuvre (9) de cette ouverture.

3. Dispositif selon la revendication 2, caractérisé en ce que les moyens d'identification du client et de ses besoins, sont constitués de moyens du genre lecteur code barre, lecteur de carte magnétique ou autre, clavier sur lequel le client peut s'identifier et transmettre sa commande etc ...

4. Dispositif selon la revendication 2, caractérisé en ce que les compartiments (2) sont divisés en alvéoles (5) de dimensions appropriées en fonction des dimensions des produits à distribuer ou à recevoir.

5. Dispositif selon la revendication 2, caractérisé en ce qu'il comporte un guichet (6) comprenant un cadre obturé par une paroi qui est divisée en plusieurs portes (8) dont la largeur égale la plus petite largeur d'une alvéole (5) d'un compartiment (2), lesquelles portes (8) sont mobiles perpendiculairement à la base de l'ouverture dudit cadre pour dévoiler l'alvéole déterminée par le choix du client

6. Dispositif selon la revendication 5, caractérisé en ce que chaque porte (8) coopère avec un système de butées escamotables qui permet le verrouillage desdites portes et le calibrage de leur ouverture en les bloquant dans une position qui est fonction de la taille de l'alvéole (5) qui se présente au guichet (6).

7. Dispositif selon la revendication 6, caractérisé en ce que les moyens de manoeuvre des portes (8) sont constitués de vérins (9), un vérin par porte, dont la course correspond au moins à la hauteur du guichet (6) libre service.

8. Dispositif selon la revendication 6, caractérisé en ce qu'il comporte des butées (B0, B1, B3) regroupées par niveaux et fonctions, sur des axes (31, 27, 29) respectivement qui sont parallèles à la base de l'ouverture, situés au-dessus des portes (8), chaque axe étant actionné par un vérin de manoeuvre (36, 37, 39, 34).

9. Dispositif selon la revendication 8, caractérisé en ce que l'axe (31) des butées de verrouillage (B0) des portes (8), en position fermée, comporte un organe (32) de rappel élastique de sécurité, qui maintient lesdites butées (B0) en position de verrouillage desdits portes, contre l'action du vérin de manoeuvre (34) pour protéger l'ouverture et maintenir les portes fermées en cas de défaillance du système d'alimentation électrique ou autre (R).

10. Dispositif selon la revendication 2, caractérisé en ce qu'il comporte, interposée entre le compartiment de stockage (2) et le guichet (6), au moins une cellule photoélectrique (41) qui contrôle le passage des produits stockés dans ledit compartiment.

11. Dispositif selon la revendication 5, caractérisé en ce que les portes (8), en position fermée, sont centrées à leur partie inférieure sur des ergots (26) solidaires d'une barrette (25) disposée à l'arrière desdites portes (8), au niveau du comptoir (7).

12. Magasin de stockage, du type à compartiments mobiles, caractérisé en ce qu'il comporte un dispositif permettant un accès libre service selon l'une quelconque des revendications 2 à 11.

13. Magasin de stockage selon la revendication 12, caractérisé en ce qu'il comporte un deuxième poste d'accès en forme de guichet (6') disposé à l'arrière, à l'opposé du guichet libre service, lequel guichet permet l'accès à l'ensemble des alvéoles d'au moins un compartiment (2).

14. Magasin de stockage selon l'une quelconque des revendications 12 ou 13, caractérisé en ce qu'il comporte plusieurs guichets d'accès en libre service pour desservir plusieurs niveaux.

## Claims

1. Method of access to self service in a warehouse of the type with movable compartments comprising products for clients or others users, characterized in that it comprises the steps of :
- identifying the client with a badge or a magnetic card thereof
- placing at the level of one of the access wickets (6) according to the choice and the needs of the identified client the compartment (2) or receptacle (5) required for the operation in progress
- calibrating and placing the opening of the wicket (6) according to the size and the position of the compartment receptacle which appears at said wicket and simultaneously
- opening the access door(s) so that the client may do his operation and closing the opening when the operation is ended.

2. Device for carrying out the method of access to self service in a warehouse of the type with movable compartments (2) containing products for clients or others users, according to claim 1, characterized in that it comprises :
- means (13, 14) for identifying the client and his needs
- handling means for the compartments to put the selected compartment (2) or receptacle (5) before the self service access wicket (6) ;
- calibration and positioning means for the opening according to the size and the position of the receptacle containing the product ;
- handling means (9) for said opening.

3. Device according to claim 2, characterized in that the means (13, 14) for identifying the client and his needs comprise means such as bar code reader, magnetic card reader or similar, keyboard on which the client may identify and may send his order etc ...

4. Device according to claim 2, characterized in that the compartments (2) are divided into receptacles (5) of suitable sizes according to the sizes of the products to deliver or to receive.

5. Device according to claim 2, characterized in that it comprises a wicket (6) having a frame obturated by a wall which is divided into a plurality of gates (8) the width of which is equal to the smallest width of a receptacle (5) of a compartment (2), said gates (8) being perpendiculary movable at the bottom of the opening of said frame in order to reveal the receptacle choosen by the client.

6. Device according to claim 5, characterized in that each gate (8) cooperates with retractable stop means allowing locking of said gates and calibrating openings thereof by locking them in a position which relates to the size of the receptacle (5) which appears to the wicket (6).

7. Device according to claim 6, characterized in that the handling means of the gates (8) are made of jacks (9), a jack per gate, the displacement of which corresponds at least to the height of the self service wicket (6).

8. Device according to claim 6, characterized in that it comprises stops (B0, B1, B3) assembled by levels and functions on shafts (31, 27, 29) which are respectively parallel to the bottom of the opening located above the gates (8), each shaft being moved by a handling jack (36, 37, 39, 34).

9. Device according to claim 8, characterized in that the shaft (31) of the locking stops (B0) of the gates (8), being in closed position, comprises a security spring back component (32) which holds said stops (B0) in locking position of said gates against the action of the handling jack (34) in order to protect the opening and hold the gates closed in the event of a failure of the electrical feeding system or similar (R).

10. Device according to claim 2, characterized in that it comprises located between the stocking compartment (2) and the wicket (6) at least a photoelectric cell (41) which controls conveyance of the stocked products in said compartment.

11. Device according to claim 5, characterized in that the gates (8) in the closed position are centered at the lower part thereof on spigots (26) integral with a bar (25) provided at the back of said gates (8) at the level of the plate (7).

12. Warehouse of the type with movable compartments, characterized in that it comprises a device allowing a self service access according to any one of claims 2 to 11.

13. Wharehouse according to claim 12, characterized in that it comprises a second access comprising a wicket (6') provided at the back, opposite to the self service wicket, said wicket allowing access to all receptacles of at least one compartment (2).

14. Warehouse according to any one of claims 12 or 13, characterized in that it comprises several self service access wickets for several levels.

## Patentansprüche

1. Verfahren zum Zugang zwecks Selbstbedienung in ein Lagerhaus mit beweglichen Fächern, die für Kunden oder andere Benutzer bestimmte Produkte enthalten, dadurch gekennzeichnet, daß es darin besteht, daß
- der Kunde durch sein magnetisches Abzeichen oder seine magnetische Karte etc. identifizert wird,
- das bzw. die für die laufende Tätigkeit erforderliche Fach (2) oder Zelle (5) abhängig von der Wahl und dem Bedarf des identifizierten Kunden auf die Höhe eines Zugangsschalters (6) gebracht wird,
- die Öffnung des Schalters (6) abhängig von der Größe und Lage der Zelle des Faches, das an dem Schalter erscheint, auf das richtige Maß und an den richtigen Platz gebracht wird sowie gleichzeitig
- die Tür oder Türen (8) für den Zugang geöffnet werden, damit der Kunde seine Tätigkeit ausführen kann, und die Öffnung wieder geschlossen wird, wenn die Tätigkeit beendet ist.

2. Vorrichtung für die Durchführung des Verfahrens zum Zugang zwecks Selbstbedienung in ein Lagerhaus mit beweglichen Fächern (2), die für Kunden oder andere Benutzer bestimmte Produkte enthalten, nach Anspruch 1, dadurch gekennzeichnet, daß sie umfaßt:
- Mittel zur Identifizierung des Kunden (13, 14) und seines Bedarfs,
- Mittel zur Betätigung der Fächer, um das ausgewählte Fach (2) oder die ausgewählte Zelle (5) vor den Schalter (6) zur Selbstbedienung zu bringen,
- Mittel, um die Öffnung in Abhängigkeit von der Größe und Lage der das Produkt enthaltenden Zelle auf das richtige Maß und an den richtigen Platz zu bringen, und
- Mittel zur Betätigung (9) dieser Öffnung.

3. Vorrichtung nach Anspruch 2, dadurch gekennzeichnet, daß die Mittel zur Identifizierung des Kunden und seines Bedarfs aus Mitteln von der Art eines Strichcodelesers, Magnetkartenlesers oder dergleichen, einer Tastatur, auf der der Kunde sich identifizieren und seinen Auftrag übermitten kann, etc. besteht.

4. Vorrichtung nach Anspruch 2, dadurch gekennzeichnet, daß die Fächer (2) in Zellen (5) mit geeigneten, von den Abmessungen des auszuteilenden oder zu empfangenden Produkts abhängigen Abmessungen aufgeteilt sind.

5. Vorrichtung nach Anspruch 2, dadurch gekennzeichnet, daß sie einen Schalter (6) umfaßt, der einen Rahmen umfaßt, der durch eine Wand verschlossen ist, die in mehrere Türen (8) aufgeteilt ist, deren Breite gleich der kleinsten Breite einer Zelle (5) eines Fachs (2) ist, wobei die Türen (8) senkrecht zu der Basis der Öffnung des Rahmens beweglich sind, um die durch die Wahl des Kunden bestimmte Zelle freizugeben.

6. Vorrichtung nach Anspruch 5, dadurch gekennzeichnet, daß jede Tür (8) mit einem System von einziehbaren Widerlagern zusammenwirkt, welche das Einrasten der Türen und das Aufmaßbringen ihrer Öffnung gestatten, indem sie dieselben in einer Lage festhalten, die von der Größe der Zelle (5) abhängt, die an dem Schalter (6) erscheint.

7. Vorrichtung nach Anspruch 6, dadurch gekennzeichnet, daß die Mittel zur Betätigung der Türen (8) aus Zylindern (9), ein Zylinder pro Tür, bestehen, deren Hub mindestens der Höhe des Schalters (6) zur Selbstbedienung entspricht.

8. Vorrichtung nach Anspruch 6, dadurch gekennzeichnet, daß sie Widerlager (B0, B1, B3) umfaßt, die nach Höhe und Funktion auf jeweiligen, zu der Basis der Öffnung parallelen, oberhalb der Türen (8) gelegenen Achsen (31, 27, 29) umstellbar sind, wobei jede Achse durch einen Betätigungszylinder (36, 37, 39, 34) in Bewegung gesetzt wird.

9. Vorrichtung nach Anspruch 8, dadurch gekennzeichnet, daß die Achse (31) der Widerlager zum Einrasten (B0) der Türen (8) in geschlossener Position als Sicherheitsvorrichtung ein elastisches Rückstellteil (32) umfaßt, das die Widerlager (B0) gegen die Tätigkeit des Betätigungszylinders (34) in der Position des Einrastens der Türen hält, um die Öffnung zu sichern und die Türen im Falle eines Ausfalls des elektrischen Versorgungssystems oder dergleichen (R) geschlossen zu halten.

10. Vorrichtung nach Anspruch 2, dadurch gekennzeichnet, daß sie mindestens eine zwischen das Lagerfach (2) und den Schalter (6) eingefügte photoelektrische Zelle (41) umfaßt, die den Durchtritt der in dem Fach gelagerten Produkte kontrolliert.

11. Vorrichtung nach Anspruch 5, dadurch gekennzeichnet, daß die Türen (8) in geschlossener Position an ihrem Unterteil auf mit einem hinter den Türen (8) auf der Höhe des Tresens (7) angeordneten Steg (25) fest verbundenen Vorsprüngen (26) zentriert sind.

12. Lagerhaus mit beweglichen Fächern, dadurch gekennzeichnet, daß es eine Selbstbedienung gestattende Vorrichtung nach einem der Ansprüche 2 bis 11 umfaßt.

13. Lagerhaus nach Anspruch 12, dadurch gekennzeichnet, daß es eine zweite Zugangsstelle in Form eines an der Rückseite gegenüber dem Selbstbedienungsschalter angeordneten Schalters (6') umfaßt, der den Zugang zu dem Satz der Zellen von mindestens einem Fach (2) gestattet.

14. Lagerhaus nach Anspruch 12 oder 13, dadurch gekennzeichnet, daß es mehrere Zugangsstellen zur Selbstbedienung umfaßt, um mehrere Ebenen zu bedienen.
